# EUROPEAN PATENT SPECIFICATION

(11) **EP 3 422 077 B1**
(45) Date of publication and mention of the grant of the patent: **30.09.2020**
(21) Application number: 17305829.8
(22) Date of filing: 30.06.2017
(51) Int. Cl.: G02B 27/01

(54) **COMBINER POSITIONING UNIT FOR A HEAD-UP DISPLAY SYSTEM, AND VEHICLE**
KOMBINATORPOSITIONIERUNGSEINHEIT FÜR EIN HEADUP-ANZEIGESYSTEM, HEADUP-ANZEIGESYSTEM UND FAHRZEUG
UNITÉ DE POSITIONNEMENT COMBINÉE POUR UN SYSTÈME D'AFFICHAGE TÊTE HAUTE, SYSTÈME D'AFFICHAGE TÊTE HAUTE ET VÉHICULE

(43) Date of publication of application: 02.01.2019
(73) Proprietor: Valeo Comfort and Driving Assistance, 94046 Créteil Cedex (FR)
(72) Inventor: LE TOUMELIN, Loic, 74321 Bietigheim-Bissingen (DE); DELPIERRE, Laurent, 94046 Creteil (FR)
(74) Representative: Pothmann, Karsten

(56) References cited:
- WO-A1-2004/011304
- US-A- 4 769 633
- US-A- 5 553 328
- US-A1- 2007 183 055

## Description

The present invention refers to a combiner positioning unit for a head-up display device for usage in vehicles, comprising a combiner support with a combiner, pivotably arranged in a housing, wherein the combiner support is manually pivotable around a pivot axis between a folded-in storage position and a folded-out operating position, and a spring unit, connected to the combiner support, comprising a spring element, wherein the spring unit is disposed and arranged in such a way that in storage position a spring force of the spring element pushes the combiner support against a first stop element of the housing, holding the combiner support in storage position, and in operating position, the spring force of the spring element pushes the combiner support against a second stop element of the housing, holding the combiner support in operating position.

The present invention also refers to head-up display system comprising the inventive combiner positioning unit.

Furthermore, the present invention refers to a vehicle comprising the head-up display system comprising the inventive combiner positioning unit.

A head-up display system usually includes a projection unit which produces a light beam intended to be directed towards a combiner in order to project images, in particular operating or driving information of a vehicle, in the form of a virtual image, in the field of view of the user, in particular a driver of a motor vehicle. The combiner is typically an angled flat piece of glass or plastic located directly in front of the user that redirects the projected image from the projection unit in such a way as to see the field of view and the projected image at the same time. Combiners may have special coatings that reflect the monochromatic light projected onto it from the projection unit while allowing all other wavelengths of light to pass through.

Combiner positioning mechanisms for a HUD system which can be moved between a storage position and an operating position are known in the art. For example such a combiner positioning system is disclosed in document US 2009/0086326 A1. In this design the positioning system is arranged on a frame including a base plate. A movable carrier is provided for supporting a combiner within the frame. The carrier is movable between a first end of the frame, where the combiner is in a retracted position (storage position), to a second end where the combiner is in a fully extended position (display position).

The US 5,553,328 discloses a device for rapidly and automatically deploying and retracting a combiner attached to a visored helmet. A combination of opposing springs, one made from conventional materials and the other from shape memory alloy (SMA), effects a detent mechanism and the retracting and deploying mechanism. The conventional spring normally exerts a greater force than the SMA spring, but the latter exerts the greater force upon being heated, preferably by means of an electric current passing through the spring. Alternative deployment and retraction means include a solenoid-conventional spring combination or an electrical motor which used in conjunction with a locking and unlocking means incorporating a SMA spring.

The US 4,769,633 discloses a display head for a head-up display system for use in a confined space, such as a high performance aircraft cockpit. The display head has a first part adapted to be mounted on an overhead member and the remainder of the display head is pivotally mounted on the first part so as to enable it to be moved readily between operative and stowed positions. In the stowed position the display head does not obstruct movement of the user's head or present an obstruction on which the user may strike his head.

The US 2007/0183055 A1 discloses a Head up display (HUD) calibration assembly designed for coupling a HUD system with the inner walls of a vehicle, and adjusting the orientation of the HUD system. The HUD calibration assembly includes a mounting tray for coupling with a HUD projector and with a HUD combiner deployment mechanism. The mounting tray includes a plurality of adjustment interface planes, each of which includes a locking screw opening, and a plurality of adjustment assemblies, each coupled with the vehicle in a respective separate anchoring location, locking the mounting tray at the desired position and orientation

Combiner positioning units require careful consideration to ensure the performance in all kinds of different conditions such as changing temperatures on a dashboard of a vehicle behind a windshield or vibrations during movement of the vehicle. Especially a combiner should not automatically be moved from storage position in operating position and vice versa due to operational vibrations of the vehicle. Furthermore, a combiner should be easily and comfortably moved between the storage position and the operating position. Additionally a repeatable positional accuracy is also important for the combiner positioning unit, because an improperly positioned combiner will not function properly in a HUD system.

It is an object of the present invention to provide a combiner positioning unit for a head-up display system comprising a combiner which can be easily and comfortably moved between a storage position and an operating position and having reduced manufacturing costs.

This object is achieved by the independent claims. Advantageous embodiments are given in the dependent claims, wherein each embodiment may individually or in combination be an aspect of the present invention.

In particular, the present invention provides a combiner positioning unit for a head-up display device for usage in vehicles, comprising a housing with a first stop element and a second stop element, a combiner support with a combiner, pivotably arranged in the housing, wherein the combiner support is manually pivotable around a pivot axis between a folded-in storage position and a folded-out operating position, wherein in storage position the combiner support abuts against the first stop element and in operating position the combiner support abuts against the second stop element, and a spring unit, connected to the combiner support, comprising a spring element, wherein the spring unit is disposed and arranged in such a way that in storage position a spring force of the spring element pushes the combiner support against the first stop element and in operating position, the spring force of the spring element pushes the combiner support against the second stop element.

According to that invention, the combiner is preferably an angled flat piece of glass or plastic. The combiner may have at least on one side a coating that reflects monochromatic light projected onto the combiner from a projection unit while allowing all other wavelengths of light to pass through. Preferably, the combiner may have a curved surface to refocus an image displayed on the combiner. More preferably, the combiner is comparable to a semi-transparent mirror.

A combiner support is a supporting and/or mounting structure for the combiner, especially for holding the combiner in the supporting and/or mounting structure.

The basic idea of the invention is that the combiner positioning unit comprises a housing with a first stop element and a second stop element. A combiner support with a combiner is pivotably arranged in the housing, wherein the combiner support is pivotable around a pivot axis between a folded-in storage position and a folded-out operating position. In storage position, the combiner is folded in. That means that an image displayed on the combiner is not visible to a user. Preferably, when the head-up display system is used in a vehicle, in storage position the combiner is preferably aligned with the dashboard of the vehicle. In operating position, the combiner is folded out for receiving a light beam of a projector. When used in a vehicle, the operating position is a rather upright position of the combiner with respect to the dashboard. In storage position the combiner support abuts against the first stop element and in operating position the combiner support abuts against the second stop element. Hence, due to the first stop element and the second stop element the combiner support and the combiner can be properly positioned in storage position and/or operating position. The storage position and/or the operating position is preferably a stable position in which the combiner support stays until it will be moved out of the respective position manually and/or automatically by a user for example. The combiner positioning unit is carried out in such a way that the combiner support when moved out of the storage position or the operating position will be moved into the operating position. A spring unit comprising a spring element is connected to the combiner support, wherein the spring unit is disposed and arranged in such a way that in storage position a spring force of the spring element pushes the combiner support against the first stop element and in operating position, the spring force of the spring element pushes the combiner support against the second stop element. Hence, due to the spring force of the spring element, the position of the combiner support in storage position and/or in operating position can be secured. The spring force applied to the combiner support for holding the combiner support in storage position and/or operating position is applied by one and the same spring element. Hence, manufacturing costs for properly positing the combiner support in storage position and/or operating position can be reduced. By manually pivoting the combiner support between storage position and operating position a simply operable combiner positing unit is provided, comprising a reliable pivoting mechanism.

According to the invention, the spring force of the spring element is pre-loaded when the combiner support is in storage position and/or in operating position. Hence, an initial spring force is applied on the combiner support for reliably positing the combiner support in storage position and/or in operating position. A proper position of the combiner support in operating position is necessary for a sharp projection of an image displayed on the combiner.

Basically, the spring unit can be arranged in any way to apply a spring force on the combiner support for positioning the combiner support in storage position and/or in operating position. According to the invention, the spring unit comprises a spring support for receiving the spring element and a spring compressor movably arranged in the spring support for compressing the spring element, wherein the spring compressor is pivotably connected to the combiner support via a connection axis and the spring support is pivotably connected to the housing via a swivel axis. Hence, the spring element is arranged in the spring support and the spring compressor is at least partially and moveably arranged in the spring support. Thus, the spring element can be compressed by the spring compressor due to a relative displacement of the spring compressor in a direction against the spring force of the spring element. Furthermore, the compressed spring element can extend by pushing the spring compressor in direction of the spring force. The spring support is pivotably connected to the housing and the spring compressor is pivotably connected to the combiner. Hence, when moving the combiner respectively the combiner support between storage position and operating position, the spring unit can be swiveled as well.

According to a preferred embodiment of the invention, the spring unit is pivotable in opposite direction of the movement of the combiner support when pivoting between storage position and operating position. Hence, when pivoting the combiner support from storage position in operating position, which is preferably a clockwise rotational direction, the spring unit is rotated around the swivel axis in a direction counterclockwise.

The pivot axis of the combiner support, the connection axis, connecting the combiner support and the spring compressor, and the swivel axis of the spring support can be arranged in any way so that in storage positon the spring force of the spring element pushes the combiner support against the first stop element and in operating position the spring force of the spring element pushes the combiner support against the second stop element. According to a preferred embodiment of the invention, in a plane perpendicular to the pivot axis of the combiner support, the pivot axis, the connection axis and the swivel axis are arranged in triangular shape when the combiner support is in storage position and/or in operating position.

According to a preferred embodiment of the invention, when pivoting the combiner between storage position and operating position, the spring element is first compressible till the pivot axis, the connection axis and the swivel axis are aligned with each other and then the compressed spring element is extensible applying the respective spring force for pressing the combiner support against the first stop element or second stop element. Hence, when pivoting the combiner support form storage position to operating position, the combiner support is moved against the spring force of the spring element, compressing the spring element. When the pivot axis, the connection axis and the swivel axis are aligned to each other, the spring element is compressed to its maximum. When the combiner support is further rotated, the spring element expands, wherein the spring force of the spring element pushes the spring compressor in axial direction in a direction out of the spring support, wherein this axial movement is transferred to the combiner support rotating it in operating position. The spring element keeps an initial spring force, pressing the combiner support against the second stop element.

According to a preferred embodiment of the invention, the angle of twist α of the combiner support for pivoting between storage position and operating position is between 10°≤ α ≤ 120°preferably between 20° ≤ α ≤ 100°and more preferably between 30°≤ α ≤ 70°.

The invention further concerns to a head-up display system for a vehicle, comprising a combiner positioning unit comprising a housing with a first stop element and a second stop element, a combiner support with a combiner, pivotably arranged in the housing, wherein the combiner support is manually pivotable around a pivot axis between a folded-in storage position and a folded-out operating position, wherein in storage position the combiner support abuts against the first stop element and in operating position the combiner support abuts against the second stop element, and a spring unit, connected to the combiner support, comprising a spring element, wherein the spring unit is disposed and arranged in such a way that in storage position a spring force of the spring element pushes the combiner support against the first stop element and in operating position, the spring force of the spring element pushes the combiner support against the second stop element, and a projector to generate a light beam loaded with information to be displayed on the combiner.

According to a preferred embodiment of the invention, in storage-position the projector is at least partially covered by the combiner. Hence, in storage position the projector can be easily protected, especially for environmental conditions like dust or the like.

Furthermore, the invention relates to a vehicle comprising a head-up display system, comprising a combiner positioning unit, comprising a housing with a first stop element and a second stop element, a combiner support with a combiner, pivotably arranged in the housing, wherein the combiner support is manually pivotable around a pivot axis between a folded-in storage position and a folded-out operating position, wherein in storage position the combiner support abuts against the first stop element and in operating position the combiner support abuts against the second stop element, and a spring unit, connected to the combiner support, comprising a spring element, wherein the spring unit is disposed and arranged in such a way that in storage position a spring force of the spring element pushes the combiner support against the first stop element and in operating position, the spring force of the spring element pushes the combiner support against the second stop element, and a projector to generate a light beam loaded with information to be displayed on the combiner.

These and other aspects of the invention will be apparent from and elucidated with reference to the embodiments described hereinafter.

In the drawings:
- Fig. 1: shows a schematic view of a combiner positioning system, comprising a combiner support with a combiner, wherein the combiner support is in storage position, according to a preferred embodiment of the invention,
- Fig. 2: shows a schematic view of the combiner positioning unit, wherein the combiner support is manually moved from storage position to operating position, compressing a spring element, according to the preferred embodiment of the invention,
- Fig. 3: shows a schematic view of the combiner positioning unit, further moving the combiner support to operating position, wherein the spring element is extended, according to the preferred embodiment of the invention,
- Fig. 4: shows a schematic view of the combiner positioning unit, wherein the combiner support is in operating position, according to the preferred embodiment of the invention,
- Fig. 5: shows a schematic view of the combiner support in operating position, according to the preferred embodiment of the invention,
- Fig. 6: shows a schematic view of the combiner support, wherein the combiner support is manually pivoted from storage position in operating position, wherein the spring element is compressed according to the preferred embodiment of the invention,
- Fig. 7: shows a schematic view of the combiner positioning unit, further moving the combiner support to storage position, wherein the spring element is extended, according to the preferred embodiment of the invention,
- Fig. 8: shows a schematic view of the combiner support in storage position, according to the preferred embodiment of the invention.

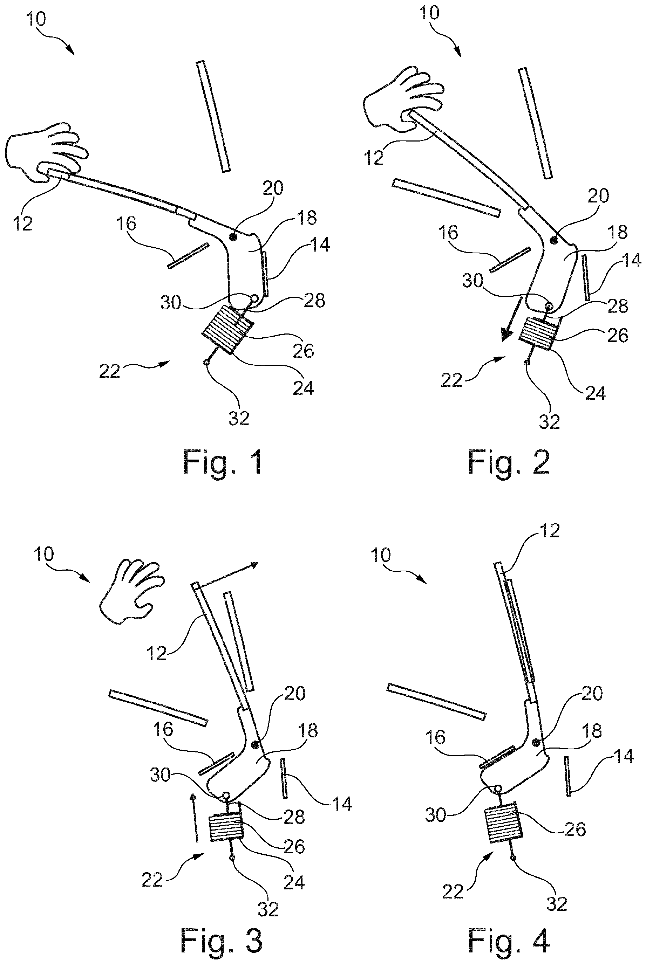

Figure 1 show a schematic side view of a combiner positioning unit 10 for a head up display system for usage in vehicles. A head-up display systems usually includes a projection unit which produces a light beam intended to be directed towards a combiner 12 of the combiner positioning unit 10 in order to project images, in particular operating or driving information of a vehicle, in the form of a virtual image, in the field of view of the user, in particular a driver of a motor vehicle. Preferably, the head-up system is arranged in and/or on a dashboard between the steering wheel and the windshield of a vehicle. The combiner positioning unit 10 is configured for positioning the combiner 12 between a storage position and an operating position, wherein in storage position the combiner 12 is folded in, preferably to cover the projecting unit protecting it from environmental influences like dust or the like. In operating position, the combiner 12 is folded out for receiving the light beam.

The combiner 12 is a curved flat piece of glass or plastic located directly in front of the user that redirects the projected image from the projection unit in such a way as to see the field of view and the projected image at the same time. The combiner 12 has a special coatings that reflect the monochromatic light projected onto it from the projection unit while allowing all other wavelengths of light to pass through.

Figures 1 to 4 show the movement of combiner 12 from storage position to operating position. The combiner positioning unit 10 comprises a housing with a first stop element 14 and a second stop element 16. A combiner support 18, holding the combiner 12, is pivotably arranged in the housing, wherein the combiner support 18 is pivotable around a pivot axis 20 between a folded-in storage position and a folded-out operating position.

In storage position, the combiner is folded in. That means that an image displayed on the combiner 12 is not visible to a user. Preferably, when the head-up display system is used in a vehicle, in storage position the combiner 12 is preferably aligned with the dashboard of the vehicle. In operating position, the combiner 12 is folded out for receiving a light beam of a projector. When used in a vehicle, the operating position is a rather upright position of the combiner 12 with respect to the dashboard.

In storage position, the combiner support 18 abuts against the first stop element 14 and in operating position, the combiner support 18 abuts against the second stop element 16. Hence, due to the first stop element 14 and the second stop element 16 the combiner support 18 and the combiner 12 can be properly positioned in storage position and operating position.

The combiner positioning unit further comprises a spring unit 22 comprising a spring support 24 for receiving a spring element 26 and a spring compressor 28 movably arranged in the spring support 24 for compressing the spring element 26. The spring compressor 28 is pivotably connected to the combiner support 18 via a connection axis 30 and the spring support 24 is pivotably connected to the housing via a swivel axis 32.

The spring element 26 is pre-loaded. Hence, the spring element 26 comprises an initial spring force, wherein in storage position the spring force for the spring element 26 pushes the combiner support 18 against the first stop element 14. In operating position, the spring force of the spring element 26 pushes the combiner support 18 against the second stop element 16. Thus, due to the spring force of the spring element 26 the position of the combiner support 16 in storage position and/or in operating position can be secured. The spring force applied to the combiner support 18, for holding the combiner support 18 in storage position and/or operating position, is applied by one and the same spring element 26. Hence, manufacturing costs for properly positing the combiner support 18 in storage position and/or operating position can be reduced. By manually pivoting the combiner support 18 between storage position and operating position a simply operable combiner positing unit 10 is provided, comprising a reliable pivoting mechanism.

The spring unit 22 is pivotable in opposite direction of the movement of the combiner support 18 when pivoting between storage position and operating position. Hence, when pivoting the combiner support 18 from storage position in operating position, which is a clockwise rotational direction of the combiner support 18 and the combiner 12, the spring unit 22 is rotated around the swivel axis 32 in a direction counterclockwise.

When pivoting the combiner 12 between storage position and operating position, the spring element 26 is first compressible till the pivot axis 20, the connection axis 30 and the swivel axis 32 are aligned with each other, and then the compressed spring element 26 is extensible applying the respective spring force for pressing the combiner support 18 against the first stop element 14 or second stop element 16. Hence, when pivoting the combiner support form storage position to operating position as shown in Figures 1 to 4, the combiner support 18 is moved against the spring force of the spring element 26, compressing the spring element as shown in Figure 2. When the pivot axis 20, the connection axis 30 and the swivel axis 32 are aligned to each other, the spring element 26 is compressed to its maximum. When the combiner support 18 is further rotated as shown in Figure 3, the spring element 26 expands, wherein the spring force of the spring element 26 pushes the spring compressor 18 in axial direction in a direction out of the spring support 24. This axial movement is transferred to the combiner support 18 rotating it in operating position as shown in Figure 4. The spring element 26 keeps an initial spring force, pressing the combiner support 18 against the second stop element 16.

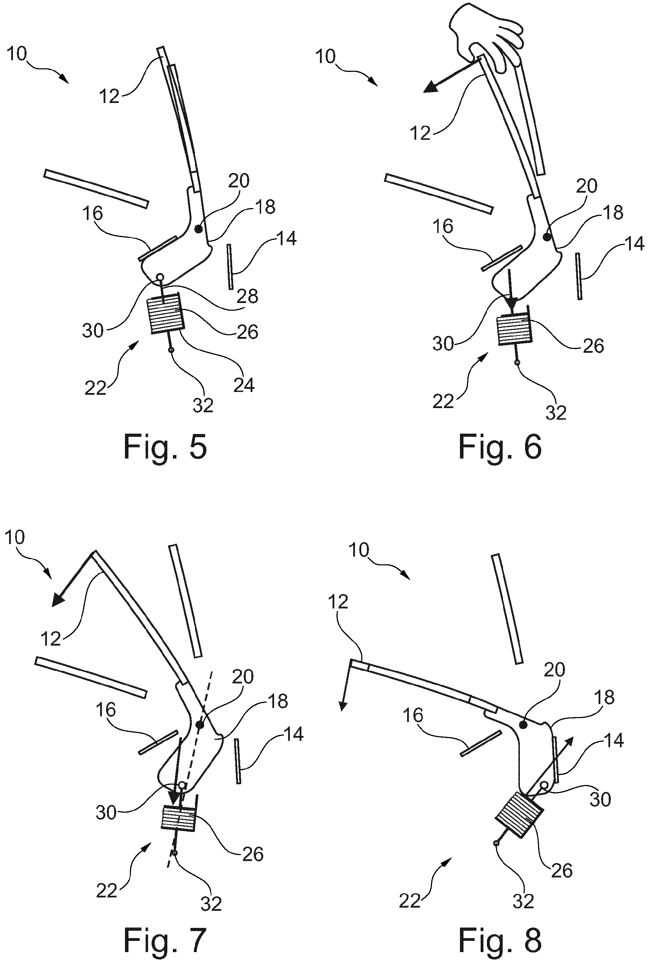

In the same way the combiner 12 respectively the combiner support 18 can be manually moved from operating position to storage position as shown in Figures 5 to 8. Figure 5 shows the combiner 12 in operating position, wherein the initial spring force of the spring element 26 presses the combiner support 18 against the second stop element 16. Figure 6 shows that the combiner is manually moved from operating position in storage position, wherein the combiner support 18 is moved against the spring force of the spring element 26, compressing the spring element 26. When the pivot axis 20, the connection axis 30 and the swivel axis 32 are aligned to each other, the spring element 26 is compressed to its maximum. Figure 7 shows that the pivot axis 20, the connection axis 30 and the swivel axis are almost aligned in one line. When the combiner support 18 is further rotated, the spring element 26 expands, wherein the spring force of the spring element 26 pushes the spring compressor 18 in axial direction in a direction out of the spring support 24, wherein this axial movement is transferred to the combiner support 18 rotating it in storage position as shown in Figure 8. The spring element 26 keeps an initial spring force, pressing the combiner support 18 against the first stop element 14. Hence, simply operable combiner positing unit 10 is provided, comprising a reliable pivoting mechanism.

**Reference signs list**

| | |
|---|---|
| Combiner positioning unit | 10 |
| Combiner | 12 |
| Frist stop element | 14 |
| Second stop element | 16 |
| Combiner support | 18 |
| Pivot axis of combiner support | 20 |
| Spring unit | 22 |
| Spring support | 24 |
| Spring element | 26 |
| Spring compressor | 28 |
| Connection axis | 30 |
| Swivel axis | 32 |

## Claims

1. Combiner positioning unit (10) for a head-up display device for usage in vehicles, comprising
a housing with a first stop element (14) and a second stop element (16),
a combiner support (18) with a combiner (12), pivotably arranged in the housing, wherein the combiner support (18) is manually pivotable around a pivot axis (20) between a folded-in storage position and a folded-out operating position, wherein in storage position the combiner support (18) abuts against the first stop element (14) and in operating position the combiner support abuts against the second stop element (16), and
a spring unit (22), connected to the combiner support (18), comprising a spring element (26), wherein the spring unit (22) is disposed and arranged in such a way that in storage position a spring force of the spring element (26) pushes the combiner support (18) against the first stop element (14) and in operating position, the spring force of the spring element (26) pushes the combiner support (18) against the second stop element (16) and wherein the spring force of the spring element (26) is pre-loaded when the combiner support (18) is in storage position or in operating position,
**characterized in that**
the spring unit (22) comprises a spring support (24) for receiving the spring element (26) and a spring compressor (28) movably arranged in the spring support (24) for compressing the spring element (26), wherein the spring compressor (28) is pivotably connected to the combiner support (18) via a connection axis (30) and the spring support (24) is pivotably connected to the housing via a swivel axis (32).

2. Combiner positioning unit (10) according to claim 1, **characterized in that** the spring unit 22 is pivotable in opposite direction of the movement of the combiner support (18) when pivoting between storage position and operating position.

3. Combiner positioning unit (10) according to claim 1 or 2, **characterized in that** in a plane perpendicular to the pivot axis (20) of the combiner support (18), the pivot axis (20), the connection axis (30) and the swivel axis (32) are arranged in triangular shape when the combiner support (18) is positioned in storage position and/or in operating position.

4. Combiner positioning unit (10) according to one of the claims 1 to 3, **characterized in that** when pivoting the combiner support (18) between storage position and operating position, the spring element (16) is first compressible till the pivot axis (20), the connection axis (30) and the swivel axis (32) are aligned with each other and then the compressed spring element (26) is extensible applying the respective spring force for pressing the combiner support (18) against the first stop element (14) or second stop element (16).

5. Combiner positioning unit (10) according to one of the previous claims, **characterized in that** the angle of twist α of the combiner support 18 for pivoting between storage position and operating position is between 10°≤ α ≤ 120° preferably between 20°≤ α ≤ 100° and more preferably between 30°≤ α ≤ 70°.

6. Head-up display device for a vehicle, comprising
a combiner positioning unit (10) according to one of the previous claims, and
a projector to generate a light beam loaded with information to be displayed on the combiner (12).

7. Head-up display device according to claim 6, **characterized in that** in storage-position the projector is at least partially covered by the combiner (12).

8. Vehicle comprising a head-up display device according to claim 6 or 7.

## Patentansprüche

1. Kombinatorpositioniereinheit (10) für eine Blickfeldanzeigevorrichtung zur Verwendung in Fahrzeugen, umfassend:
ein Gehäuse mit einem ersten Anschlagelement (14) und einem zweiten Anschlagelement (16),
eine drehbar in dem Gehäuse angeordnete Kombinatorhalterung (18) mit einem Kombinator (12),
wobei die Kombinatorhalterung (18) zwischen einer eingeklappten Aufbewahrungsstellung und einer ausgeklappten Betriebsstellung manuell um eine Drehachse (20) drehbar ist, wobei die Kombinatorhalterung (18) in der Aufbewahrungsstellung an dem ersten Anschlagelement (14) anliegt und die Kombinatorhalterung in der Betriebsstellung an dem zweiten Anschlagelement (16) anliegt, und
eine Federeinheit (22), die mit der Kombinatorhalterung (18) verbunden ist und ein Federelement (26) umfasst, wobei die Federeinheit (22) auf eine solche Weise eingerichtet und angeordnet ist, dass in der Aufbewahrungsstellung eine Federkraft des Federelements (26) die Kombinatorhalterung (18) gegen das erste Anschlagelement (14) drückt und in der Betriebsstellung die Federkraft des Federelements (26) die Kombinatorhalterung (18) gegen das zweite Anschlagelement (16) drückt und wobei die Federkraft des Federelements (26) vorbelastet ist, wenn sich die Kombinatorhalterung (18) in der Aufbewahrungsstellung oder in der Betriebsstellung befindet,
**dadurch gekennzeichnet, dass**
die Federeinheit (22) eine Federhalterung (24) zum Aufnehmen des Federelements (26) und einen in der Federhalterung (24) bewegbar angeordneten Federspanner (28) zum Spannen des Federelements (26) umfasst, wobei der Federspanner (28) über eine Verbindungsachse (30) drehbar mit der Kombinatorhalterung (18) verbunden ist und die Federhalterung (24) über eine Schwenkachse (32) drehbar mit dem Gehäuse verbunden ist.

2. Kombinatorpositioniereinheit (10) nach Anspruch 1, **dadurch gekennzeichnet, dass** die Federeinheit (22) beim Drehen zwischen der Aufbewahrungsstellung und der Betriebsstellung in der entgegengesetzten Richtung der Bewegung der Kombinatorhalterung (18) drehbar ist.

3. Kombinatorpositioniereinheit (10) nach Anspruch 1 oder 2, **dadurch gekennzeichnet, dass** in einer senkrecht auf der Drehachse (20) der Kombinatorhalterung (18) stehenden Ebene die Drehachse (20), die Verbindungsachse (30) und die Schwenkachse (32) in einer Dreiecksform angeordnet sind, wenn die Kombinatorhalterung (18) in der Aufbewahrungsstellung und/oder in der Betriebsstellung positioniert ist.

4. Kombinatorpositioniereinheit (10) nach einem der Ansprüche 1 bis 3, **dadurch gekennzeichnet, dass** das Federelement (16) beim Drehen der Kombinatorhalterung (18) zwischen der Aufbewahrungsstellung und der Betriebsstellung zunächst spannbar ist, bis die Drehachse (20), die Verbindungsachse (30) und die Schwenkachse (32) aneinander ausgerichtet sind, und das gespannte Federelement (26) dann durch Ausüben der entsprechenden Federkraft zum Drücken der Kombinatorhalterung (18) gegen das erste Anschlagelement (14) oder das zweite Anschlagelement (16) entspannbar ist.

5. Kombinatorpositioniereinheit (10) nach einem der vorhergehenden Ansprüche, **dadurch gekennzeichnet, dass** der Verdrehwinkel α der Kombinatorhalterung (18) zum Drehen zwischen der Aufbewahrungsstellung und der Betriebsstellung zwischen 10° ≤ α ≤ 120°, vorzugsweise zwischen 20° ≤ α ≤ 100° und besonders bevorzugt zwischen 30° ≤ α ≤ 70° liegt.

6. Blickfeldanzeigevorrichtung für ein Fahrzeug, umfassend:
eine Kombinatorpositioniereinheit (10) nach einem der vorhergehenden Ansprüche und
einen Projektor zum Erzeugen eines Lichtstrahls, der mit Informationen, die auf dem Kombinator (12) angezeigt werden sollen, geladen ist.

7. Blickfeldanzeigevorrichtung nach Anspruch 6, **dadurch gekennzeichnet, dass** der Projektor in der Aufbewahrungsstellung wenigstens zum Teil durch den Kombinator (12) abgedeckt ist.

8. Fahrzeug, umfassend eine Blickfeldanzeigevorrichtung nach Anspruch 6 oder 7.

## Revendications

1. Unité de positionnement de combineur (10) pour un dispositif d'affichage tête haute destiné à être utilisé dans des véhicules, comprenant
un boîtier avec un premier élément de butée (14) et un second élément de butée (16),
un support de combineur (18) avec un combineur (12), disposé de manière pivotante dans le boîtier, le support de combineur (18) pouvant être pivoté manuellement autour d'un axe de pivotement (20) entre une position de rangement repliée et une position de fonctionnement dépliée, en position de rangement le support de combineur (18) étant en butée contre le premier élément de butée (14) et en position de fonctionnement le support de combineur étant en butée contre le second élément de butée (16), et
une unité à ressort (22), reliée au support de combineur (18), comprenant un élément ressort (26), l'unité à ressort (22) étant disposée et conçue de sorte qu'en position de rangement, une force de ressort de l'élément ressort (26) pousse le support de combineur (18) contre le premier élément de butée (14) et en position de fonctionnement, la force de ressort de l'élément ressort (26) pousse le support de combineur (18) contre le second élément de butée (16) et la force de ressort de l'élément ressort (26) étant préchargée lorsque le support de combineur (18) est en position de rangement ou en position de fonctionnement,
**caractérisée en ce que**
l'unité à ressort (22) comprend un support de ressort (24) pour recevoir l'élément ressort (26) et un compresseur de ressort (28) disposé de manière mobile dans le support de ressort (24) pour comprimer l'élément ressort (26), le compresseur de ressort (28) étant relié de manière pivotante au support de combineur (18) par l'intermédiaire d'un axe de liaison (30) et le support de ressort (24) étant relié de manière pivotante au boîtier par l'intermédiaire d'un axe de rotation (32).

2. Unité de positionnement de combineur (10) selon la revendication 1, **caractérisée en ce que** l'unité à ressort (22) peut pivoter dans la direction opposée au mouvement du support de combineur (18) lors du pivotement entre la position de rangement et la position de fonctionnement.

3. Unité de positionnement de combineur (10) selon la revendication 1 ou 2, **caractérisée en ce que** dans un plan perpendiculaire à l'axe de pivotement (20) du support de combineur (18), l'axe de pivotement (20), l'axe de liaison (30) et l'axe de rotation (32) sont disposés en forme de triangle lorsque le support de combineur (18) est positionné en position de rangement et/ou en position de fonctionnement.

4. Unité de positionnement de combineur (10) selon l'une des revendications 1 à 3, **caractérisée en ce que** lors du pivotement du support de combineur (18) entre la position de rangement et la position de fonctionnement, l'élément ressort (16) est d'abord compressible jusqu'à ce que l'axe de pivotement (20), l'axe de liaison (30) et l'axe de rotation (32) soient alignés les uns avec les autres, puis l'élément ressort (26) comprimé est extensible en appliquant la force de ressort respective pour presser le support de combineur (18) contre le premier élément de butée (14) ou le second élément de butée (16).

5. Unité de positionnement de combineur (10) selon l'une des revendications précédentes, **caractérisée en ce que** l'angle de torsion α du support de combineur (18) pour le pivotement entre la position de rangement et la position de fonctionnement est compris entre 10°≤ α ≤ 120°, de préférence entre 20°≤ α ≤ 100° et de préférence encore entre 30°≤ α ≤ 70°.

6. Dispositif d'affichage tête haute pour un véhicule, comprenant
une unité de positionnement de combineur (10) selon l'une des revendications précédentes, et
un projecteur pour générer un faisceau lumineux chargé d'informations à afficher sur le combineur (12).

7. Dispositif d'affichage tête haute selon la revendication 6, **caractérisé en ce qu'**en position de rangement, le projecteur est au moins partiellement couvert par le combineur (12).

8. Véhicule comprenant un dispositif d'affichage tête haute selon la revendication 6 ou 7.
